Europäisches Patentamt

European Patent Office

Office européen des brevets

(19)

(11) Publication number: **0 152 265 B2**

(12)

# NEW EUROPEAN PATENT
# SPECIFICATION

(45) Date of publication of the new patent specification:
**11.10.95**

(51) Int. Cl.6: **C08J 5/18**, G11B 5/704,
G11B 5/64

(21) Application number: **85300764.9**

(22) Date of filing: **05.02.85**

The file contains technical information submitted after the application was filed and not included in this specification

(54) **Oriented polyester film and its use.**

(30) Priority: **09.02.84 JP 23567/84**

(43) Date of publication of application:
**21.08.85 Bulletin 85/34**

(45) Publication of the grant of the patent:
**04.10.89 Bulletin 89/40**

(45) Mention of the opposition decision:
**11.10.95 Bulletin 95/41**

(84) Designated Contracting States:
**FR GB**

(56) References cited:
EP-A- 0 124 291      DE-A- 2 264 307
DE-A- 3 219 240      JP-A- 5 278 953
JP-A- 5 515 860      JP-A- 5 545 118
US-A- 3 221 226      US-A- 3 884 870
US-A- 4 096 109      US-A- 4 191 523
US-A- 4 348 446

Industrial and Engineering Chemistry, vol. 11, no. 10, 1939, pp 545-546

(73) Proprietor: **Toyo Boseki Kabushiki Kaisha
No.2-8, Dojimahama 2-chome
Kita-ku
Osaka-shi
Osaka 530 (JP)**

Proprietor: **Kabushiki Kaisha Nippon Magphane
9-20, Akasaka 1-chome
Minato-Ku
Tokyo-to (JP)**

(72) Inventor: **Kuze, Katsuaki
360-80 Mano-cho
Ohtsu-shi
Shiga-ken (JP)**
Inventor: **Nishino, Yasuhiro
24-20 Heiwa-cho
Tsuruga-shi
Fukui-ken (JP)**
Inventor: **Matsuyama, Yujiro
2-2-609 Nionohama 2-chome
Ohtsu-shi
Shiga-ken (JP)**
Inventor: **Maeda, Kozo
2-11 Takenouchi-cho
Takatsuki-shi
Osaka-fu (JP)**

EP 0 152 265 B2

Inventor: **Kobayasi, Masahiro**
**12-4 Otowasenbon-cho**
**Yamashina-ku**
**Kyoto-shi**
**Kyoto-fu (JP)**
Inventor: **Okudaira, Tadashi**
**9-2-305 Toy-cho**
**Tsuruga-shi**
**Fukui-ken (JP)**
Inventor: **Hongo, Tsuyoshi**
**27-14, Honkatata 3-chome**
**Ohtsu-shi**
**Shiga-ken (JP)**
Inventor: **Makimura, Osamu**
**1812-5 Miwa-cho**
**Ogaki-shi**
**Gifu-ken (JP)**

(74) Representative: **Perry, Robert Edward et al**
**GILL JENNINGS & EVERY**
**Broadgate House**
**7 Eldon Street**
**London EC2M 7LH (GB)**

**Description**

The present invention relates to oriented polyester films containing inorganic particles.

In general, polyesters such as polyethylene terephthalate have good physical and chemical characteristics; therefore, they are used in various applications, for instance, fibres, mouldings and films such as base films for magnetic recording tapes, floppy discs, photography, condensers, packaging, Roentgen films and micro-films. In such uses, polyester films must have, inter alia, satisfactory slip and abrasion resistance, because these properties influence considerably the workability in film production and processing for various applications, and the quality of the produced films.

Particularly when a polyester film is used for the manufacture of a magnetic recording tape, there is very high friction and abrasion between the film surface and the coating roller on application of a magnetic coating composition on to the film surface, which cause wrinkles and scuff marks on the film surface.

Further, the resultant magnetic recording tapes, which are used for audio tapes, video tapes, computer tapes and the like by sitting a film coated with magnetic coating composition, move slidably in close contact with many guide rolls and a reproduction head. Friction and abrasion therefrom are so great that scuff marks and strain on the film are readily produced during winding off and winding up by reel or cassette. In some cases, the film surface is scraped off, to give a white powder, and this may cause drop-out, i.e. the lack of magnetic recording signals.

Further, when a polyester film is used repeatedly as a magnetic recording tape, the running characteristics thereof deteriorate owing to increasing friction coefficient between the tape and metallic guide rollers or the like.

In order to improve the running characteristics such as low friction, abrasion resistance and durability of a polyester film, a number of minute concave and convex areas are formed at the surface of the film so as to decrease the contact area of the film with guide rolls. Formation of such concave and convex areas may be accomplished, for instance, by a procedure wherein insoluble particles are separated out from the catalyst residue as the result of polymerization, or by a procedure wherein inactive inorganic particles are incorporated into the polymeric material.

Usually, particles having a larger particle size produce reduced friction. In the case of a magnetic recording tape, particularly precision films such as video film, however, particles of larger size in the film afford larger projections or concave and convex areas in the magnetic layer, and the spacing between the magnetic recording tape and a magnetic recording head during running causes loss and drop-out. there is thus the competing desire that the size of particles in the film should be reduced, so as to make the concave and convex areas on the surface of the film as minute as possible.

In particular, a magnetic recording tape, which needs high S/N ratio, such as video tapes of metal coating type and vacuum evaporation type, has a remarkably thin magnetic layer, and hence, a shape on the surface of its base film directly appears as such on the magnetic layer. Thus, when the flatness of the base film is low, magnetic transduction characteristics of video tapes produced by coating or vacuum evaporation of magnetic composition therefrom are remarkably inferior. Therefore, in such applications, flatness is particularly required without increasing friction and loss of abrasion resistance.

DE—A—2264307 discloses abrasion-resistant biaxially-oriented polyethylene terephthalate films having excellent slip properties, which contain 0.01—0.5% by weight of inert additives such as silica having an average particle size of 0.01—1 $\mu$m, and 0.02—0.1 % by weight of calcium carbonate particles having an average particle size of 0.5—30 $\mu$m (the percentages being based on the total weight of the polymer).

EP—A—0124291, which forms a part of the state of the art in the meaning of Article 54(3) EPC, discloses a biaxially-oriented film of a polyester such as polyethylene terephthalate and, on the film, particles of titanium dioxide having an average particle diameter of not less than 0.1 $\mu$m, and optionally also calcium carbonate particles.

According to the present invention, an oriented polyester film comprising a polyester derived from ethylene terephthalate as the major monomeric unit; and, based on the polyester, from 0.01 to 1.0 % by weight of silica and/or titanium dioxide particles having an average size of 0.01 to 0.5 $\mu$m; and from 0.02 to 0.5 % by weight of calcium carbonate particles having an average particle size of 0.04 to 0.48 $\mu$m (but less than 0.1 $\mu$m if titanium dioxide particles but no silica particles are present); in which more than 99.5% by weight of the sum of the particles are less than 5 $\mu$m in size and obtainable by incorporation in the slurry state, and in which each of these particles has a volume shape factor, f, of 0.08 to $\pi/6$, wherein f = $v/D^3$, v is the volume of the particle ($\mu$m$^3$) and D is the maximum diameter of the particle ($\mu$m) on projected plan.

An oriented polyester film of the present invention can have good flatness and magnetic transduction characteristics (when used as a magnetic recording medium), as well as good slip and abrasion resistance, providing good running characteristics.

The polyester constituting the film of the present invention may comprise crystalline polyesters such as polyalkylene terephthalate, preferably polyethylene terephthalate. More preferably, of the repeating units, the polyester comprises not less than 80 mole % ethylene terephthalate. Other repeating units, if present, may be one or more of dicarboxylic acid components such as isophthalic, p - β - oxyethoxybenzoic, 2,6 - naphthalenedicarboxylic and diphenyl - 4,4' - dicarboxylic acids, 4,4' - dicarboxybenzophenone, bis(4 - carboxyphenyl)ethane, adipic, sebacic, 5-sodium sulfoisophthalic and cyclohexane - 1,4 - dicarboxylic acids; glycol components such as propylene glycol, butanediol, neopentyl glycol, diethylene glycol, cyclohexane dimethanol, ethylene oxide adduct of bisphenol A, polyethylene glycol, polypropylene glycol and polytetramethylene glycol; and oxycarboxylic acid components such as p-oxybenzoic acid. In addition, the polyester used in the present invention also may include as copolymerizable components a small amount of a compound which contains amide, urethane, ether or carbonate bonds.

The polyester used in the present invention can be produced by any conventional method, such as direct polymerization wherein an aromatic dicarboxylic acid is directly reacted with glycol or an ester exchange method wherein a dimethyl ester of an aromatic dicarboxylic acid is subjected to ester exchange reaction with glycol. The film may be either uniaxially oriented or biaxially oriented. Usually, a biaxially oriented film is particularly favorable.

Inorganic particles used in the invention may include any silica, titanium dioxide and calcium carbonate particles, provided that their average particle size is as defined in the present invention. Further, the average particle size and the amount of each type of particle may be employed independently insofar as the conditions are as defined above. The polyester film can employ any calcium carbonate such as natural calcium carbonate and synthetic calcium carbonate. Examples of the calcium carbonate are heavy-duty calcium carbonate, light-duty calcium carbonate and colloidal calcium carbonate. These particles may optionally be surface-treated. Further, a dispersing aid and/or a coagulation inhibitor may be incorporated therewith, if desired.

Further, the crystal form of each particle has no specific limitation, but each particle has a volume shape factor within the range of 0.08 to $\pi/6$. The volume shape factor is calculated as follows:

$$f = v/D^3$$

wherein v is the volume of particles ($\mu m^3$) and D is the maximum diameter ($\mu m$) on projected plan. The volume shape factor means the degree of spherical nature; where the factor is closer to $\pi/6$, the shape is closer to a sphere.

The average particle size of silica and titanium dioxide particles used in the present invention is 0.01 to 0.5 $\mu m$, preferably 0.01 to 0.4 $\mu m$, more preferably 0.01 to 0.3 $\mu m$. Particularly, in an application wherein high flatness is required, such as metal coating-type and vacuum evaporation-type video tapes, the particle size is 0.01 to 0.1 $\mu m$. When the particle size is less than 0.01 $\mu m$, friction, abrasion resistance and running durability are unfavorably affected. On the other hand, when the particle size is more than 0.5 $\mu m$, the flatness at the surface is not sufficient for a magnetic recording tape, particularly a video tape. In addition, the number of coarse particles, which cause drop-out, is increased, and the magnetic transduction characteristics are reduced.

The amount of silica and/or titanium dioxide particles is 0.01 to 1.0% by weight, based on the weight of the polyester, preferably 0.02 to 0.6% by weight, more preferably 0.05 to 0.5% by weight. Particularly, in an application wherein excellent flatness is required, the amount is 0.05 to 0.3% by weight. When the amount is less than 0.01% by weight, low friction, abrasion resistance and running durability are undesirably affected. On the other hand, when the amount is more than 1.0% by weight, the flatness at the surface is not sufficient for a magnetic recording tape, particularly a video tape, and the number of coarse particles is unfavorably high, causing reduced magnetic transduction characteristics.

The average particle size of the calcium carbonate is within a range of 0.04 to 0.48 $\mu m$. In an application wherein running durability and abrasion resistance are specifically required, such particle size is within a range of 0.1 to 0.48 $\mu m$. In an application wherein remarkable flatness is specifically required, such particle size is within a range of 0.04 to 0.1 $\mu m$. When the particle size is less than 0.01 $\mu m$, the low friction, abrasion resistance and running durability are unfavorably affected. When the particle size is more than 0.5 $\mu m$, the flatness at the surface is unsufficient. In addition, the number of coarse particles, which cause drop-out, is increased, and the magnetic transduction characteristics are unfavorably affected.

The amount of calcium carbonate particles is, based on the weight of the polyester, 0.02 to 0.5% by weight. Particularly, in applications such as metal coating-type and vacuum evaporation-type video tapes, wherein excellent flatness is required, the amount is 0.02 to 0.2% by weight. When the amount is less than 0.005% by weight, the low friction, abrasion resistance and running durability are undesirably affected.

4

When the amount is more than 1.0% by weight, the flatness at the surface is unsufficient for magnetic recording tape, particularly video tape. In addition, the number of coarse particles, which cause drop-out, is increased, and electromagnetic transduction characteristics are unfavorably affected.

The average particle size of the calcium carbonate particles may be smaller or, preferably, larger than that of the silica or titanium dioxide particles.

The term "average particle size" as herein used is intended to mean the particle size of the equivalent spherical particle size distribution as calculated according to the Stokes' formula at 50% integration.

To obtain the given average particle size, inorganic material which is commercially available may be pulverized by a per se conventional procedure to make uniform powders, optionally followed by sieving, classification or centrifugation.

According to the present invention, the fine particles are incorporated into a polyester, of which the oriented film is made, at any stage on the manufacture of the polyester or its film, and it is particularly preferred to carry out the incorporation prior to completion of the initial condensation. On incorporation, the inorganic fine particles may be in a slurry or powder state. For prevention of fly as well as enhancement of supply precision or uniformity, the incorporation in a slurry state, preferably in a slurry of ethylene glycol, is favored. On preparing the slurry, a uniform dispersion is required so as to retain the characteristics of the particles as much as possible.

When the particles are incorporated in the slurry state, the amount of particles having a particle size of not less than 5 $\mu$m is preferably 0.5% by weight or less based on the total weight of particles, so that the coarse particle content is low.

On incorporation of the particles in slurry state, a slurry containing silica and titanium dioxide, and a slurry containing calcium carbonate may be incorporated into the polyester separately or simultaneously. When simultaneously, they may be incorporated through separate inlets. Both slurries may be admixed uniformly prior to being added into the reaction system for manufacture of the polyester. Alternatively, the polyester is prepared containing the particles in high concentration, without coagulation, followed by adjustment to the desired concentration of particles.

The polyester may contain inherent particles, i.e. fine particles separated out in the course of its manufacture, insofar as the content and particle size of the inherent particles do not result in an increase of the number of coarse particles and do not reduce the flatness at the surface.

When a tape is used such that only one side thereof contacts metallic rollers, only the contact side may contain the given inert inorganic particles, the other side may contain other appropriate inert inorganic particles, or may be another layer, without particles, dependent upon its applications.

Apart from the incorporation of silica and/or titanium dioxide and calcium carbonate, the production of the polyester and the manufacture of the film may be accomplished by per se conventional procedures. Stretching of the resulting film may be also accomplished by per se conventional procedures.

The resulting oriented film of the present invention is suitable for preparation of a film usable in various fields including electrical field, photographic field such as a micro film or base film for vacuum evaporation type film. It is preferred for the manufacture of a magnetic recording base, particularly the base of a magnetic recording tape, more particularly the base of a video tape.

Practical and presently preferred embodiments of the invention are illustratively shown in the following Examples wherein % and part(s) are by weight unless otherwise indicated.

Measurement of the physical properties was carried out in the following manner:

(1) Processability of film

A rolled tape made by cutting the test film to a small width was run in contact with a metallic guide roll at a high speed for a long time. The tape tension after passing through the guide roll (slipperiness) and the amount of white powders produced at the surface of the guide roll (abrasion resistance) were evaluated on the following criteria.

| Grade | Slipperiness |
|---|---|
| 1 | High tension (many scuff marks) |
| 2 | Increased tension (several scuff marks) |
| 3 | Moderate tension (slight scuff marks) |
| 4 | Reduced tension (no material scuff marks) |
| 5 | Low tension (no scuff marks) |

| Grade | Abrasion resistance |
|-------|---------------------|
| 1 | Large amount of white powders |
| 2 | Considerable amount of white powders |
| 3 | Small amount of white powders |
| 4 | No material amount of white powders |
| 5 | No white powder |

(2) Running resistance (repeated running characteristics)

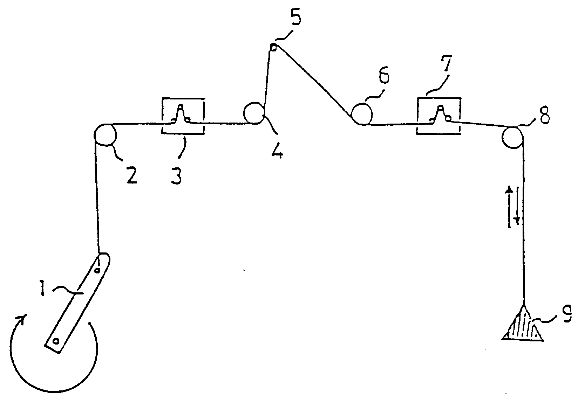

The running resistance were measured by using equipment as shown in Figure 1 of the accompanying drawing, wherein 1 indicates a crank; 2, 4, 6 and 8 indicate free rolls; 3 and 7 indicate tension detectors; 9 indicates a load; and 5 indicates a commercially available guide pin.

The test polyester film was run under the atmosphere at a temperature of 23°C and a relative humidity of 65% in the condition that the coarse side of the film was in contact with a guide pin of commercially-available household video recorder at an angle of 3/4 $\pi$ (radian). The guide pin had a maximum peak to valley roughness of 15 and an average roughness at the center line of 0.08, by measurement with a contact finger type apparatus for measurement of surface roughness. The reciprocating running was carried out 100 times under a 50 g weight and constant tension, and the angular velocity of the crank was 8.0 rpm. The increases of coefficients of static and dynamic friction after running from initial value ($\Delta\mu$ks, $\Delta\mu$kd) were evaluated on the following criteria.

Increase of coefficient of static and dynamic friction:

| Grade | |
|-------|---|
| 1 | 0.20 or more |
| 2 | 0.15—0.20 |
| 3 | 0.10—0.15 |
| 4 | 0.05—0.10 |
| 5 | less than 0.05 |

(3) Average particle size

By the use of a centrifugation type apparatus for measurement of particle size distribution (manufactured by Shimadzu Seisakusho), the equivalent spherical particle size distribution was determined, and the value at 50% integration was taken as the average particle size.

(4) Surface flatness of film (TAR)

Using a contact finger type apparatus for measurement of three dimensional surface roughness (SE-3AK; Kosaka Kenkyusho Company), the heights for quantitization width of 0.00312 $\mu$m were read into an outer memory unit under the following conditions: radius of needle, 2 $\mu$m; loaded weight, 70 mg; cut off on length of film, 0.25 mm; standard length of measurement, 1 mm; distance of measurement point, 2 $\mu$m. Such measurement was carried out every 2 $\mu$m in the crosswise direction of film successively at 150 times (measuring over 0.3 mm on crosswise direction of a film). The TAR (three dimensional average roughness; micron) is calculated by following formula:

$$TAR = \frac{1}{75000} \sum_{i=1}^{500} \sum_{j=1}^{150} \Delta h(i,j) \qquad (I)$$

$$\Delta h(i,j) = [h(i,j) - \frac{1}{75000} \sum_{i=1}^{500} \sum_{j=1}^{150} h(i,j)] \qquad (II)$$

wherein h(i,j)[i = 1 to 500, j = 1 to 150] is the direction of the height.

(5) Number of coarse particles

A small amount of the test film was interposed between two cover glasses and melt-pressed at 280°C. Immediately after cooling, observation was made by the use of a phase contrast microscope, and the number of particles having a maximum size of not less than 5 $\mu$m (measuring area of 4.8 mm$^2$) within the visible field was counted by the aid of an image analyzer "Luzex 500" manufactured by Nippon Refulator K.K. The particle number was evaluated on the basis of the following criteria:

| Grade | |
|---|---|
| 1 | 51 or more particles/4.8 mm$^2$ |
| 2 | 21—50 particles/4.8 mm$^2$ |
| 3 | 11—20 particles/4.8 mm$^2$ |
| 4 | 4—10 particles/4.8 mm$^2$ |
| 5 | 0—3 particles/4.8 mm$^2$ |

(6) Electromagnetic transduce characteristics (S/N ratio)

The resulting film was made into a magnetic recording tape The signal of 50% white level was measured at an optimum recording current for each recording tapes. The ratio of signal to noise (S/N) in video demodulation signals on regeneration was measured by a video noise measuring apparatus. The S/N ratio were evaluated in comparison with a commercially available standard video tape on the following criteria:

| Grade | S/N ratio |
|---|---|
| 1 | small |
| 2 | reduced |
| 3 | equivalent to commercially-available magnetic recording tape |
| 4 | increased |
| 5 | high |

Example 1

Firstly, esterification was carried out using a reaction apparatus for continuous esterification comprising two mixing tanks each equipped with a stirrer, a condenser, an inlet for supply and an outlet for discharge.

A slurry of terephthalic acid in ethylene glycol having a molar ratio of ethylene glycol/terephthalic acid of 1.7 and containing antimony trioxide (289 ppm in terms of antimony atom per terephthalic acid unit) was supplied continuously to the first mixing tank for the first esterification. Simultaneously, from the separate inlet for terephthalic acid, a solution of magnesium acetate tetrahydrate in ethylene glycol and a solution of sodium acetate in ethylene glycol were continuously supplied thereto respectively at rates of 100 ppm (in terms of mg atom) and of 10 ppm (in terms of Na atom) per each polyester unit in the reaction mixture passing through said mixing tank. The reaction was carried out at a temperature of 255°C under atmospheric pressure with an average retention time of 4.5 hours.

The reaction mixture was continuously discharged from the first mixing tank and then supplied to the second mixing tank for the second esterification. Ethylene glycol (0.5 part), an ethylene glycol solution of trimethyl phosphate (64 ppm in terms of P), an ethylene glycol slurry containing silica (average particle size, 0.04 $\mu$m; 0.25% based on the weight of the polymer) and an ethylene glycol slurry containing calcium carbonate (average particle size, 0.08 $\mu$m; 0.15% based on the weight of the polymer) per polyester unit in the reaction mixture passing through the second mixing tank were continuously supplied thereto from separate inlets respectively. The reaction was carried out at a temperature of 260°C under atmospheric pressure with an average retention time of 5.0 hours.

Then, polycondensation of the mixture was carried out by feeding the resulting esterification product continuously into two-stage reaction apparatus for continuous polycondensation equipped with a stirrer, a condenser, an inlet for charge and an outlet for discharge, to give a polyester having an intrinsic viscosity of 0.620.

The polyester thus produced was melt-extruded at a temperature of 290°C, and the resulting film was stretched at 90°C with a stretch ratio of 3.5 in the machine direction and at 130°C with a stretch ratio of 3.5 in the transverse direction, followed by heat treatment at 220°C to-obtain an oriented film of 15 μm thick.

The physical characteristics of the oriented film are shown in the following Table, from which it will be understood that the oriented polyester film is satisfactory according to all the given characteristics, including flatness at surface, slipperiness, abrasion resistance, running characteristics, low number of coarse particles, and electromagnetic transduction.

Examples 2 to 10 and Reference Examples 1 to 9

The procedure of Example 1 was repeated, changing various parameters, as shown in the following Table. The Table also gives the physical characteristics of the various oriented films. The Examples of the invention show uniformly good results, but the Reference Examples do not.

| | Titanium dioxide | | Silica | | Calcium carbonate | | Running characteristics | | | | | | | |
| | | | | | | | Running resistance | | Processability | | | | | |
| | Average particle size (μm) | Amount (wt.%) | Average particle size (μm) | Amount (wt.%) | Average particle size | Amount (wt.%) | (Δμks) | (Δμkd) | Slipperiness (grade) | Abrasion resistance (grade) | Flatness TAR (μm) | Number of coarse particle (grade) | Electro-magnetic transduce characteristics (grade) |
|---|---|---|---|---|---|---|---|---|---|---|---|---|---|
| Ex. 1 | — | — | 0.04 | 0.25 | 0.08 | 0.15 | 4 | 4 | 4 | 4 | 0.007 | 5 | 5 |
| Ex. 2 | — | — | 0.04 | 0.25 | 0.47 | 0.05 | 5 | 5 | 5 | 5 | 0.011 | 5 | 4 |
| Ref. Ex. 1 | — | — | 0.04 | 0.25 | — | — | 1 | 1 | 3 | 3 | 0.005 | 5 | 5 |
| Ref. Ex. 2 | — | — | 0.04 | 0.50 | — | — | 2 | 2 | 2 | 2 | 0.006 | 5 | 5 |
| Ref. Ex. 3 | — | — | — | — | 0.47 | 0.05 | 3 | 3 | 4 | 4 | 0.008 | 5 | 5 |
| Ref. Ex. 4 | — | — | — | — | 0.35 | 0.10 | 3 | 3 | 4 | 4 | 0.008 | 5 | 5 |
| Ref. Ex. 5 | — | — | 0.52 | 0.25 | 0.47 | 0.05 | 5 | 5 | 5 | 5 | 0.053 | 1 | 1 |
| Ref. Ex. 6 | — | — | 0.04 | 1.20 | 0.47 | 0.05 | 5 | 5 | 5 | 5 | 0.013 | 2 | 2 |
| Ex. 3 | — | — | 0.04 | 0.15 | 0.47 | 0.10 | 5 | 5 | 5 | 5 | 0.010 | 5 | 4 |
| Ref. Ex. 7 | — | — | 0.65 | 0.15 | 0.08 | 0.10 | 4 | 4 | 4 | 4 | 0.045 | 1 | 1 |
| Ex. 4 | — | — | 0.08 | 0.20 | 0.08 | 0.20 | 4 | 4 | 4 | 4 | 0.008 | 5 | 5 |
| Ref. Ex. 8 | — | — | 0.04 | 1.20 | 0.08 | 0.15 | 5 | 5 | 5 | 4 | 0.012 | 2 | 2 |
| Ref. Ex. 9 | — | — | 0.65 | 0.20 | 0.60 | 0.07 | 5 | 5 | 5 | 5 | 0.055 | 1 | 1 |
| Ex. 5 | — | — | 0.04 | 0.50 | 0.35 | 0.07 | 5 | 5 | 5 | 5 | 0.012 | 5 | 4 |
| Ex. 6 | — | — | 0.04 | 0.50 | 0.20 | 0.20 | 5 | 5 | 4 | 5 | 0.011 | 5 | 4 |
| Ex. 7 | — | — | 0.04 | 0.10 | 0.08 | 0.10 | 4 | 4 | 5 | 4 | 0.004 | 5 | 5 |
| Ex. 8 | — | — | 0.04 | 0.25 | 0.15 | 0.15 | 5 | 5 | 4 | 5 | 0.009 | 5 | 4 |
| Ex. 9 | 0.03 | 0.20 | — | — | 0.08 | 0.15 | 4 | 4 | 5 | 4 | 0.007 | 5 | 5 |
| Ex. 10 | 0.25 | 0.15 | 0.04 | 0.30 | 0.20 | 0.10 | 5 | 5 | 5 | 5 | 0.012 | 5 | 4 |

## Claims

1. An oriented polyester film comprising a polyester derived from ethylene terephthalate as the major monomeric unit; and, based on the polyester, from 0.01 to 1.0 % by weight of silica and/or titanium dioxide particles having an average size of 0.01 to 0.5 μm; and from 0.02 to 0.5 % by weight of calcium carbonate particles having an average particle size of 0.04 to 0.48 $\mu$m (but less than 0.1 $\mu$m if titanium dioxide particles but no silica particles are present); in which more than 99.5% by weight of the sum of the particles are less than 5 $\mu$m in size and obtainable by incorporation in the slurry state, and in which each of these particles has a volume shape factor, f, of 0.08 to $\pi/6$, wherein f = v/D$^3$, v is the volume of the particle ($\mu$m$^3$) and D is the maximum diameter of the particle ($\mu$m) on projected plan.

2. A film according to claim 1, wherein the silica and/or titanium dioxide particles have an average particle size of 0.01 to 0.4 $\mu$m.

3. A film according to claim 1, wherein the silica and/or titanium dioxide particles have an average particle size of 0.01 to 0.3 $\mu$m.

4. A film according to claim 1, wherein the silica and/or titanium dioxide particles have an average particle size of 0.01 to 0.1 $\mu$m.

5. A film according to any preceding claim, which comprises 0.02 to 0.6 % by weight of the silica and/or titanium dioxide particles.

6. A film according to claim 5, which comprises 0.05 to 0.5 % by weight of the silica and/or titanium dioxide particles.

7. A film according to claim 5, which comprises 0.05 to 0.3 % by weight of the silica and/or titanium dioxide particles.

8. A film according to any preceding claim, wherein the calcium carbonate particles have an average particle size of 0.04 to 0.1 $\mu$m.

9. A film according to any of claims 1 to 7, wherein the calcium carbonate particles have an average particle size of 0.1 to 0.48 $\mu$m.

10. A film according to any preceding claim, which comprises 0.02 to 0.2 % by weight of the calcium carbonate particles.

11. A film according to any preceding claim, wherein the average particle size of the calcium carbonate particles is larger than that of the silica and/or titanium dioxide particles.

12. A film according to any preceding claim, which is biaxially-oriented.

13. A video tape which comprises, as the base film thereof, an oriented polyester film according to any preceding claim.

**Patentansprüche**

1. Orientierter Polyesterfilm, der als wichtigsten monomeren Bestandteil einen aus Ethylenterephthlat gewonnenen Polyester umfaßt; und, beruhend auf dem Polyester, 0,01 bis 1,0 Gewichtsprozent Siliciumdioxid und/oder Titandioxidteilchen mit einer mittleren Größe von 0,01 bis 0,5 $\mu$m; und von 0,02 bis 0,5 Gewichtsprozent Calciumcarbonatteilchen mit einer mittleren Teilchengröße von 0,04 bis 0,48 $\mu$m (aber weniger als 0,1 $\mu$m, falls Titandioxidteilchen, aber keine Siliciumdioxidteilchen vorhanden sind); in dem mehr als 99,5 Gewichtsprozent der Summe der Teilchen kleiner als 5 $\mu$m ist, und die beim Einbau in dem Schlammzustand erhältlich sind, und in dem jedes dieser Teilchen einen Volumengestaltungsfaktor f von 0,08 bis $\pi/6$ hat, worin f = v/D$^3$ ist, v das Volumen des Teilchens ($\mu$m$^3$) ist, und D der maximale Durchmesser des Teilchens ($\mu$m) auf einem projizierten Aufriß ist.

2. Film nach Anspruch 1, in dem die Siliciumdioxid- und/oder Titandioxidteilchen eine mittlere Teilchengröße von 0,01 bis 0,4 $\mu$m aufweisen.

3. Film nach Anspruch 1, in dem die Siliciumdioxid- und/oder Titandioxidteilchen eine mittlere Teilchengröße von 0,01 bis 0,3 $\mu$m aufweisen.

**4.** Film nach Anspruch 1, in dem die Siliciumdioxid- und/oder Titandioxidteilchen eine mittlere Teilchengröße von 0,01 bis 0,1 $\mu$m aufweisen.

**5.** Film nach einem der vorhergehenden Ansprüche, der 0,02 bis 0,6 Gewichtsprozent der Siliciumdioxid- und/oder Titandioxidteilchen umfaßt.

**6.** Film nach Anspruch 5, der 0,05 bis 0,5 Gewichtsprozent der Siliciumdioxid- und/oder Titandioxidteilchen umfaßt.

**7.** Film nach Anspruch 5, der 0,05 bis 0,3 Gewichtsprozent der Siliciumdioxid- und/oder Titandioxidteilchen umfaßt.

**8.** Film nach einem der vorhergehenden Ansprüche, in dem die Calciumcarbonatteilchen eine mittlere Teilchengröße von 0,04 bis 0,1 $\mu$m aufweisen.

**9.** Film nach einem der Ansprüche 1 bis 7 , in dem die Calciumcarbonatteilchen eine mittlere Teilchengröße von 0,01 bis 0,48 $\mu$m aufweisen.

**10.** Film nach einem der vorhergehenden Ansprüche, der 0,02 bis 0,2 Gewichtsprozent der Calciumcarbonatteilchen umfaßt.

**11.** Film nach einem der vorhergehenden Ansprüche, bei dem die durchschnittliche Teilchengröße der Calciumcarbonatteilchen größer als die der Siliciumdioxid- und/oder Titandioxidteilchen ist.

**12.** Film nach einem der vorhergehenden Ansprüche, der biaxial orientiert ist.

**13.** Videoband, das als Grundfilm einen orientierten Polyesterfilm nach einem der vorhergehenden Ansprüche umfaßt.

**Revendications**

**1.** Film de polyester orienté comprenant un polyester dérivé du téréphtalate d'éthylène comme unité monomère principale, et, par rapport au polyester, de 0,01 à 1,0 % en poids de particules de silice et/ou de dioxyde de titane ayant une taille moyenne de 0,01 à 0,5 $\mu$m ; et de 0,02 à 0,5 % en poids de particules de carbonate de calcium ayant une taille moyenne de particules de 0,04 à 0,48 $\mu$m (mais inférieure à 0,1 $\mu$m lorsque des particules de dioxyde de titane sont présentes mais sans particules de silice) ; dans lequel plus de 99,5 % en poids de la somme des particules ont une taille inférieure à 5 $\mu$m et peuvent être obtenues par incorporation à l'état de bouillie, et dans lequel chacune de ces particules a un facteur volumétrique de forme, f, de 0,08 à $\pi/6$, où f = v/D$^3$, v est le volume des particules ($\mu$m$^3$) et, D est le diamètre maximum des particules ($\mu$m) sur un plan de projection.

**2.** Film selon la revendication 1, dans lequel les particules de silice et/ou de dioxyde de titane ont une taille moyenne de particules de 0,01 à 0,4 $\mu$m.

**3.** Film selon la revendication 1, dans lequel les particules de silice et/ou de dioxyde de titane ont une taille moyenne de particules de 0,01 à 0,3 $\mu$m.

**4.** Film selon la revendication 1, dans lequel les particules de silice et/ou de dioxyde de titane ont une taille moyenne de particules de 0,01 à 0,1 $\mu$m.

**5.** Film selon l'une quelconque des revendications précédentes, qui comprend 0,02 à 0,6 % en poids de particules de silice et/ou de dioxyde de titane.

**6.** Film selon la revendication 5 qui comprend 0,05 à 0,5 % en poids de particules de silice et/ou de dioxyde de titane.

**7.** Film selon la revendication 5 qui comprend 0,05 à 0,3 % en poids de particules de silice et/ou de dioxyde de titane.

**8.** Film selon l'une quelconque des revendications précédentes, dans lequel les particules de carbonate de calcium ont une taille moyenne de particules de 0,04 à 0,1 $\mu$m.

**9.** Film selon l'une quelconque des revendications 1 à 7 dans lequel les particules de carbonate de calcium ont une taille moyenne de particules de 0,1 à 0,48 $\mu$m.

**10.** Film selon l'une quelconque des revendications précédentes, qui comprend 0,02 à 0,2 % en poids de particules de carbonate de calcium.

**11.** Film selon l'une quelconque des revendications précédentes, dans lequel la taille moyenne de particules des particules de carbonate de calcium est supérieure à celle des particules de silice et/ou de dioxyde de titane.

**12.** Film selon l'une quelconque des revendications précédentes qui est orienté biaxialement.

**13.** Bande vidéo qui comprend, comme film de base, un film de polyester orienté selon l'une quelconque des revendications précédentes.